Europäisches Patentamt

European Patent Office

Office européen des brevets

(19)

(11) Veröffentlichungsnummer : **0 167 733**
**B1**

(12) **EUROPÄISCHE PATENTSCHRIFT**

(45) Veröffentlichungstag der Patentschrift :
**15.06.88**

(21) Anmeldenummer : **85105123.5**

(22) Anmeldetag : **26.04.85**

(51) Int. Cl.⁴ : **F 02 D 23/00**

(54) **Verfahren zum Betreiben einer fremdgezündeten Brennkraftmaschine.**

(30) Priorität : **12.06.84 DE 3421775**

(43) Veröffentlichungstag der Anmeldung :
**15.01.86 Patentblatt 86/03**

(45) Bekanntmachung des Hinweises auf die Patenterteilung : **15.06.88 Patentblatt 88/24**

(84) Benannte Vertragsstaaten :
**AT CH FR GB IT LI**

(56) Entgegenhaltungen :
**DE-A- 2 161 946**
**DE-A- 2 650 061**
**FR-A- 2 516 595**
**GB-A- 2 062 902**
**US-A- 4 103 486**
**US-A- 4 209 981**

(73) Patentinhaber : **AUDI AG**
**Postfach 220**
**D-8070 Ingolstadt (DE)**

(72) Erfinder : **Piech, Ferdinand, Dr.**
**Gerolfinger Strasse 128**
**D-8070 Ingolstadt (DE)**

(74) Vertreter : **Le Vrang, Klaus**
**AUDI AG Postfach 220 Patentabteilung I/EQP**
**D-8070 Ingolstadt (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft ein Verfahren zum Betreiben einer fremdgezündeten Brennkraftmaschine gemäß dem Oberbegriff des Patentanspruches 1.

Die Leistung von Abgasturboladern ist bei Betriebszuständen der Brennkraftmaschine mit geringer Abgasmenge, z. B. im Schub, im Leerlauf und in der unteren Teillast, nicht voll befriedigend. Insbesondere beim plötzlichen, starken Beschleunigen der Brennkraftmaschine unter Last tritt eine gewisse Zeitverzögerung bis zum Erreichen des maximal möglichen Drehmomentes auf, welche durch das verzögerte Ansprechen und Hochlaufen des Abgasturboladers bedingt ist.

Durch die gattungsbildende FR-A 25 16 595 ist es bekannt, im Schubbetrieb der Brennkraftmaschine die Zündung zu unterbrechen und das somit unverbrannte Brennstoff-Luftgemisch im Abgasleitungssystem stromauf der Abgasturbine nachzuverbrennen. Dazu ist im Abgassystem eine Nachzündvorrichtung zur Zündung des Brennstoff-Luftgemisches vorgesehen. Ferner ist eine Umluftleitung zwischen der Verbrennungsluftleitung und der Abgasleitung angeordnet, über die noch aus dem Verdichter des Abgasturboladers geförderte Verbennungsluft in das Abgasleitungssystem eingespeist wird.

Durch diese Maßnahme ist es möglich, die Drehzahl des Abgasturboladers während des Schubbetriebes der Brennkraftmaschine anzuheben, so daß bei einem nachfolgenden Beschleunigen der Brennkraftmaschine relativ unverzögert eine hohe Leistung bzw. eine hohes Drehmoment zur Verfügung steht. Diese Drehzahlanhebung des Abgasturboladers erfolgt aber nur im Schubbetrieb, also nicht aus dem Leerlaufbetrieb der Brennkraftmaschine heraus oder im unteren Teillastbereich. Hier kommt es nach wie vor zu einem verzögerten Ansprechen des Abgasturboladers. Ferner sind durch das totale Abschalten der Zündung beim Wiederzünden der Brennkraftmaschine relativ starke Lastwechselreaktionen zu befürchten.

Durch die DE-A 21 61 946 ist es bekannt geworden, zur schnellen Aufheizung einer Abgasreinigungsanlage im Leerlauf der Brennkraftmaschine die Zündung nach spät zu verlegen und die Kraftstoffrate im Kraftstoff-Luft-Gemisch der Brennkraftmaschine zu erhöhen. Mit diesen Maßnahmen wird die Temperatur des Abgases der Brennkraftmaschine erhöht und die Nachverbrennung der Abgase in der Abgasreinigungsanlage verstärkt. Auf die Leitung eines Abgasturboladers soll hier jedoch nicht eingewirkt werden.

Aufgabe der Erfindung ist es, ein einfaches Verfahren zum verbesserten Ansprechen des Abgasturboladers in allen Betriebssituationen der Brennkraftmaschine aufzuzeigen.

Die verfahrensgemäße Aufgabe wird mit den kennzeichnenden Merkmalen des Patentanspruches 1 gelöst. Es wird somit Brennstoff-Luftgemisch unmittelbar über die Zylinder der Brennkraftmaschine (im Falle einer Hubkolben-Brennkraftmaschine) in die Abgasleitungen eingeleitet und dort durch nachfolgendes, bereits gezündetes und zum Teil entspanntes Abgas durch Flammen- oder Fackelzündung gezündet. Dadurch wird die Abgasenergie wesentlich erhöht und der Abgasturbolader auf Drehzahl gehalten. Zur Vermeidung eines Drehzahleinbruches der Brennkraftmaschine im Leerlauf- oder im unteren Teillastbetrieb wird zugleich der Zusatz durch die Einlaßleitung der Brennkraftmaschine bzw. deren Füllung erhöht. Zugleich wird durch diese Maßnahme auch die Abgasmenge und damit verbunden die Drehzahl des Abgasturboladers angehoben. Über das Muster der Zündausblendungen kann somit gegebenenfalls die Leerlaufdrehzahl der Brennkraftmaschine, insbesondere aber der Ladedruck in der Einlaßleitung der Brennkraftmaschine gesteuert werden. Mit zunehmender Anzahl zeitlicher Zündausblendungen nimmt auch der Anteil an unverbranntem Brennstoff-Luftgemisch und der Umfang der Nachverbrennung zu.

Da bei Schub, Leerlauf- und Teillastbetrieb der Brennkraftmaschine nur ein Teil der Leistung der Brennkraftmaschine benötigt wird, wirkt sich der durch die Zündausblendungen verursachte Leistungsabfall der Brennkraftmaschine nicht nachteilig aus.

Die Einleitung der Abgase in die Abgasturbine sollte über möglichst kurze Abgasleitungen erfolgen, welche in einem gemeinsamen Abgassammler stromauf der Abgasturbine münden können. Durch die kurzen Abgasleitungen ist sichergestellt, daß eine spontane Nachzündung durch aus gezündeten Brennräumen einströmendes, noch brennendes Abgas erfolgt.

Durch die Merkmale des Patentanspruches 2 wird die Abgastemperatur der gezündeten Zylinder erhöht, was zu einer verbesserten Nachzündung des Brennstoff-Luftgemisches in den Abgasleitungen und zu einem vermehrten Energiegehalt im Abgas führt.

Eine weitere Maßnahme zur Verbesserung des Ansprechverhaltens des Abgasturboladers ist im Patentanspruch 3 angeführt. Dabei kann sowohl der Brennstoffanteil nur der nicht gezündeten Zylinder oder aber der Brennsoffanteil sämtlicher Zylinder erhöht werden.

Zur Steuerung der Zündausblendungen, des Zündzeitpunktes und gegebenenfalls der Gemischanfettung kann neben der Lastzustandserfassung der Brennkraftmaschine bevorzugt der Ladedruck P in der Einlaßleitung entsprechend Patentanspruch 4 dienen. Es kann somit mit einem relativ geringen Steuerungsaufwand eine geeignete Modifizierung der erforderlichen Abgasenergie zur Aufrechterhaltung einer gewünschten Ladedruckkurve erzielt werden.

Durch die Merkmale des Patentanspruches 5 ist ferner sichergestellt, daß das durch eine Zündausblendung den Abgasleitungen zugeführte, unverbrannte Brennstoff-Luftgemisch jeweils unmittelbar danach nachgezündet wird, so daß größere Ansammlungen von unverbranntem Brennstoff-Luftgemisch ausgeschlossen sind.

Der steuerungstechnische Aufwand zur Realisierung des erfindungsgemäßen Verfahrens ist relativ gering, insbesondere wenn die Brennkraftmaschine bereits mit einer elektronischen Zündeinrichtung und einer elektronischen Brennstoff-Zumeßeinrichtung ausgerüstet ist, da hier die erforderlichen Funktionen unmittelbar in die bereits vorhandene Hardware eingearbeitet werden können. Gegebenenfalls können auch bereits die angeführten Sensoren und Stellungsgeber vorhanden sein, wobei dann nur die Programmspeicher entsprechend auszulegen sind. Durch die Bypassleitung kann mit relativ geringem Steuerungsaufwand eine exakte Anhebung des Durchsatzes an Verbrennungsluft verwirklicht werden.

Ein Ausführungsbeispiel der Erfindung ist im folgenden mit weiteren Einzelheiten näher erläutert. Die schematische Zeichnung zeigt eine erfindungsgemäße Vorrichtung an einer Hubkolben-Brennkraftmaschine.

Eine Hubkolben-Brennkraftmaschine 10 mit 5 Zylindern I-V weist fünf einzelne Abgasleitungen 12, 14, 16, 18, 20 auf, die in einem mehrflutigen Abströmflansch 22 zusammengeführt sind. Am Flansch 22 ist das Turbinengehäuse 24 eines Abgasturboladers 26 befestigt. Über diese Abgasleitungen wird das aus den nicht näher dargestellten Brennräumen der Brennkraftmaschine über entsprechende Auslaßkanäle 11, 13, 15, 17, 19 ausgestoßene Abgas der Abgasturbine 28 des Abgasturboladers 26 zugeführt. Über eine mit den Abgasleitungen 14, 18 verbundene Bypassleitung 30 und ein Bypassventil 32 kann zur Abregelung der Drehzahl der Abgasturbine 28 Abgas aus den korrespondierenden Zylindern unter Umgehung der Abgasturbine 28 in die stromab liegende Abgasleitung 34 abgeblasen werden.

Die Abgasturbine 28 treibt einen Verdichter 36 an, welcher Verbrennungsluft in Strömungsrichtung über einen Luftfilter 38 und einen Luftmengenmesser 40 ansaugt und diese durch eine Einlaßleitung 42 zu einem Luftsammler 44 drückt, welcher über Einzelleitungen 46, 48, 50, 52, 54 die Verbrennungsluft den einzelnen Zylindern der Brennkraftmaschine zuführt. In der Einlaßleitung 42 ist eine Drosselklappe 56 vorgesehen, mittels welcher die Leistung der Brennkraftmaschine über ein Bediengestänge 58 und ein Leistungssteuerglied (Gaspedal 60) willkürlich verstellbar ist.

An der Einlaßleitung 42 ist eine Bypassleitung 43 vorgesehen, welche stromab und stromauf der Drosselklappe 56 in die Einlaßleitung 42 mündet und welche durch ein elektromagnetisch betätigtes Ventil 45 absperrbar ist.

Die Versorgung der Brennkraftmaschine 10 mit Brennstoff wird mittels elektromagnetisch betätigter Einspritzventile 61 vorgenommen, welche Einspritzventile über entsprechende elektrische Leitungen mit einem elektronischen Steuergerät 64 verbunden sind. Das Steuergerät 64 bestimmt in bekannter Weise nach Maßgabe der relevanten Parameter wie angesaugte Verbrennungsluftmenge, Stellung des Leistungssteuergliedes 60, Drehzahl und Temperatur der Brennkraftmaschine etc. die Öffnungsdauer der Einspritzventile je Arbeitszyklus. Die Förderung des Brennstoffes aus dem Brennstofftank zu den Einspritzventilen 61 ist herkömmlicher Art und deshalb nicht dargestellt.

Die Zündung des Brennstoff-Luftgemisches in den Brennräumen der Brennkraftmaschine 10 erfolgt mittels einer elektronischen Zündeinrichtung 66, welche über entsprechende elektronische Leitungen mit den in die Brennräume der Brennkraftmaschine ragenden Zündkerzen 66 verbunden sind. In der Zündeinrichtung 66 wird neben der Bereitstellung des Hochspannungs-Zündfunkens zu dem jeweiligen Zylinder der Zündzeitpunkt abhängig von der Drehzahl und der Last der Brennkraftmaschine 10 sowie in bekannter Weise von weiteren Parametern errechnet.

Ferner sind in die Abgasleitungen 11, 13, 15, 17, 19 ragende Zündkerzen 62 vorgesehen, welche ebenfalls über elektrische Leitungen mit der Zündeinrichtung 66 verbunden sind und komplementär mit einem jeweils phasenverschobenen Zylinder mit Hochspannung versorgt werden. Die Phasenverschiebung ist dabei derart, daß der Zündfunke an den Zündkerzen 62 etwa dann erfolgt, wenn bei dem jeweiligen Zylinder I-V der Ausstoß der gezündeten oder nicht gezündeten Gase erfolgt.

In der Einlaßleitung 42 ist ein Ladedrucksensor 68 vorgesehen, der den jeweils anliegenden Ladedruck P an ein eine logische Verknüpfungsschaltung enthaltendes Steuergerät 70 in Form eines elektrischen Signales meldet. Mittels eines weiteren elektrischen Stellungsgebers 72 wird die Last der Brennkraftmaschine, entsprechend der Stellung des Gaspedales 60, in das Steuergerät 70 eingegeben.

Die Auslegung bzw. Programmierung des Steuergerätes 70 ist derart, daß bei Unterschreitung eines vorbestimmten Ladedruckes P und bei einem bestimmten Lastbereich entsprechend dem Leerlauf (Gaspedal in Ruhestellung) und der Teillast (nicht voll gedrücktes Gaspedal) Signale von dem Steuergerät 70 zu den Steuergeräten 64 und 66 sowie zu dem Ventil 45 in der Bypassleitung 43 abgegeben werden, welche folgende Steuerungsfunktionen auslösen :

Beim Steuergerät 66 der Zündeinrichtung der Brennkraftmaschine werden bei absinkendem Ladedruck P zunehmend Zündausblendungen verteilt über die Zylinder I-V gesteuert, so daß beispielsweise jede zehnte bis zweite Zündung nicht erfolgt und somit Brennstoff-Luftgemisch in zunehmender Menge in die Abgasleitungen 12 bis 20 einströmt.

Ferner werden die Zündzeitpunkte der Zylinder I-V um ca. 5 bis 20° Kurbelwellenwinkel abweichend vom jeweils normalen Zündzeitpunkt nach spät verlegt.

Vom Steuergerät 64, welches die Brennstoff-Zumessung der Brennkraftmaschine bewirkt, werden sämtliche Zylinder I-V mit um ca. 5 % bis 15 % vermehrter Brennstoffmenge gegenüber der normalen Brennstoffmenge versorgt.

Schließlich wird das Ventil 45 in der Bypassleitung 43 geöffnet, so daß zusätzlich zu dem durch die Drosselklappe 56 aufgesteuerten Querschnitt über die Bypassleitung 43 Verbrennungsluft der Brennkraftmaschine zugeführt bzw. der Durchsatz an Verbrennungsluft erhöht wird.

Diese Maßnahmen bewirken mit abnehmendem Ladedruck P eine zunehmende Abgasmenge bzw. Abgasenergie stromauf der Abgasturbine 28, so daß in der Einlaßleitung 42 stromauf der Drosselklappe 56 ein relativ hoher Ladedruck aufrechterhalten wird. Mit zunehmendem Ladedruck P bei zunehmender Drehzahl der Brennkraftmaschine werden zumindest die Zündausblendungen wieder gleitend zurückgesteuert und schließlich bei Erreichen der vorbestimmten Ladedruckschwelle wieder aufgehoben. Mit der Aufhebung der Zündausblendungen wird auch die Bypassleitung 43 durch das ventil 45 wieder abgesperrt, so daß die Verbrennungsluft in der Einlaßleitung 42 nur noch über die Drosselklappe 56 strömen kann.

Sobald das Leistungssteuerglied bzw. das Gaspedal 60 auf Vollast gestellt wird, werden ebenfalls sofort die Zündausblendungen, die Zündzeitpunktverstellung nach spät und die Gemischanfettung eliminiert.

Im Gehäuse 74 des Abgasturboladers 26 ist ein Temperatursensor 76 eingesetzt, welcher über eine elektrische Leitung mit dem Steuergerät 70 verbunden ist und welcher bei zu hohen Temperaturen des Abgasturboladers 26 ebenfalls Steuerungseingriffe auf die Steuergeräte 64, 66 verhindert.

Ein in der Funktion ähnlicher Temperatursensor kann an der Brennkraftmaschine 10, beispielsweise am Zylinderkopf vorgesehen sein und Steuerungseingriffe durch das Steuergerät 70 auf die Steuergeräte 64, 66 dann unterbinden, wenn die Brennkraftmaschine 10 um einen vorgegebenen wert unterhalb ihrer Betriebstemperatur liegt.

Zwischen den Abgasleitungen 12, 14, 16, 18, 20 können in unmittelbarer Nähe des Abgasaustrittes aus der Brennkraftmaschine Verbindungsrohre 78, 79, 80, 81 (gestrichelt dargestellt) geringeren Querschnittes vorgesehen sein. Über diese Verbindungsrohre kann erforderlichenfalls eine Fackelzündung des in die Abgasleitungen eingeleiteten Brennstoff-Luftgemisches über die noch brennenden Abgase aus den gezündeten Zylindern bewirkt werden. Es versteht sich, daß bei dieser Ausführung keine in die Abgaskanäle 11, 13, 15, 17, 19 ragende Zündkerzen 62 benötigt werden.

Sofern die Brennkraftmaschine bereits mit einer Bypassleitung an der Einlaßleitung für die Verbrennungsluft versehen ist, über die beispielsweise eine Leerlaufdrehzahlanhebung beim Kaltlauf bewirkt wird, könnte diese Bypassleitung auch zur Leistungsanhebung bei den gesteuerten Zündausblendungen herangezogen werden.

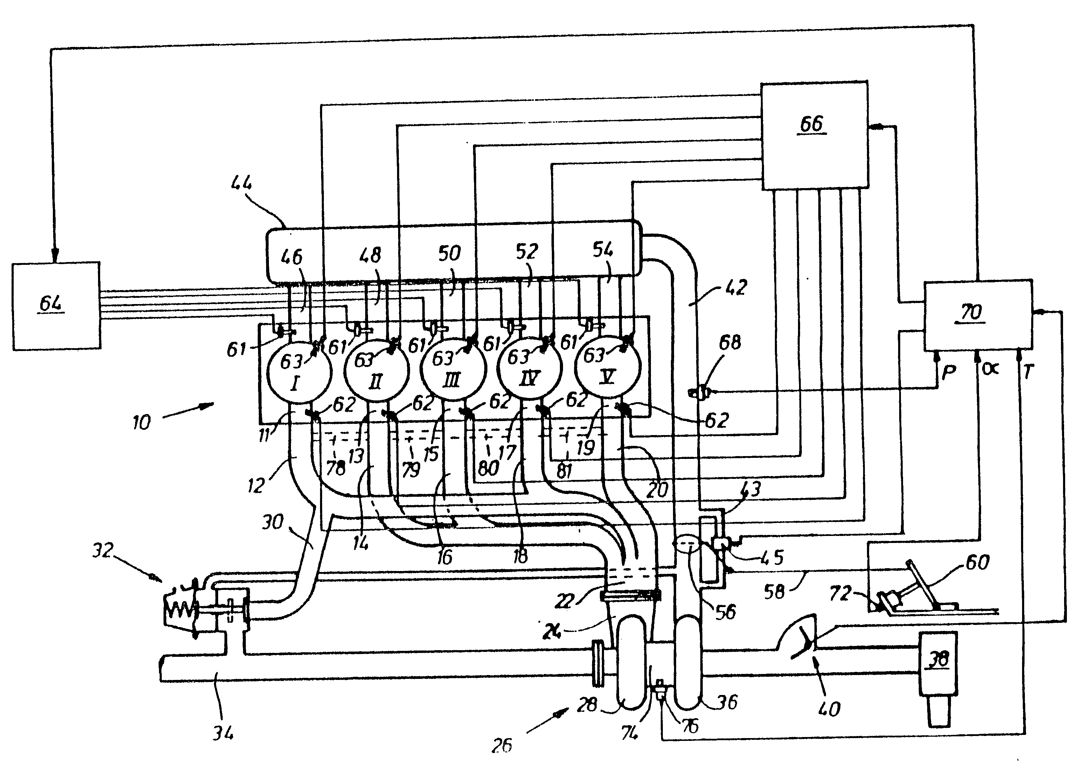

## Patentansprüche

1. Verfahren zum Betreiben einer fremdgezündeten Brennkraftmaschine, insbesondere in einem Kraftfahrzeug, mit einer Zündeinrichtung, einer Brennstoff-Zumeßeinrichtung und einem Abgasturbolader, dessen Abgasturbine über Abgasleitungen das Abgas aus den Brennräumen der Brennkraftmaschine zugeführt wird und die einen Verdichter für die Verbrennungsluft antreibt, wobei im Schubbetrieb der Brennkraftmaschine die Zündung abgeschaltet wird, dadurch gekennzeichnet, daß

a) Schubbetrieb, Leerlauf- und unterer Teillastbetrieb der Brennkraftmaschine ermittelt werden ;

b) in jedem dieser Betriebszustände eine Verbrennung des Abgasgemisches in den Abgasleitungen betrieben wird, wobei

c) nur einzelne oder mehrere Zündausblendungen nach einem vorgegebenen Muster gesteuert werden ;

d) mit abnehmenden Ladedruck B und bei abnehmender Lastanforderung vermehrt Zündausblendungen vorgenommen werden ;

e) der gesteuerte Durchsatz von Verbrennungsluft in der Einlaßleitung der Brennkraftmaschine während der Ausblendung von Zündungen durch zusätzliches Aufsteuern des Einlaßquerschnittes erhöht wird.

2. Verfahren nach Anspruch 1, dadurch gekennzeichnet, daß während des Ausblendens von Zündungen der Zündzeitpunkt bei den gezündeten Brennräumen nach spät verschoben wird.

3. Verfahren nach den Ansprüchen 1 und 2, dadurch gekennzeichnet, daß mit dem Ausblenden von Zündungen der Brennstoffanteil des Brennstoff-Luftgemisches gegenüber der normalen, im wesentlichen stöchiometrischen, Gemischzusammensetzung erhöht wird.

4. Verfahren nach den Ansprüchen 1 bis 3, dadurch gekennzeichnet, daß zur Steuerung der Zündausblendungen, der Zündzeitpunktverstellung und der Anhebung des Brennstoffanteiles der Ladedruck P stromab des Verdichters und die Lastanforderung der Brennkraftmaschine verwendet werden.

5. Verfahren nach den Ansprüchen 1 bis 4, dadurch gekennzeichnet, daß das Muster der Zündausblendungen derart ist, daß einer jeden Zündausblendung zumindest eine Zündung der zeitlich nachfolgenden Brennräume folgt.

## Claims

1. Process for the operation of a spark-ignited internal-combustion engine, in particular in a motor vehicle, with an ignition system, a fuel metering system and an exhaust-gas turbocharger, the exhaust gas turbine of which is fed the exhaust gas from the combustion chambers of the internal-combustion engine via exhaust pipes and drives a compressor for the combustion air, the ignition being switched off during deceleration of the internal-combustion engine, characterized in that

a) deceleration, idling and lower part-load operation of the internal-combustion engine are determined ;

b) in each of these operating states, a combustion of the exhaust gas mixture is performed in the exhaust pipes, in which operation

c) only single or a plurality of ignition suppressions are controlled in accordance with a given pattern ;

d) ignition suppressions are increasingly performed with decreasing charging pressure B and with decreasing load requirement ;

e) the controlled throughput of combustion air in the intake line of the internal-combustion engine during the suppression of ignitions is increased by additional controlled opening of the intake cross-section.

2. Process according to Claim 1, characterized in that, during the suppression of ignitions, the ignition point is retarded as far as the ignited combustion chambers are concerned.

3. Process according to Claims 1 and 2, characterized in that, with the suppression of ignitions, the proportion of fuel in the fuel-air mixture is increased in comparison with the normal, essentially stoichiometric mixture composition.

4. Process according to Claims 1 to 3, characterized in that, for controlling the ignition suppressions, the ignition point adjustment and the raising of the fuel proportion, the charging pressure P downstream of the compressor and the load requirement of the internal-combustion engine are used.

5. Process according to Claims 1 to 4, characterized in that the pattern of the ignition suppressions is such that each ignition suppression is followed by at least one ignition of the temporally succeeding combustion chambers.

**Revendications**

1. Procédé pour la commande de fonctionnement d'un moteur à combustion interne à allumage à étincelles, en particulier dans un véhicule automobile, moteur qui comporte un dispositif d'allumage, un dispositif d'alimentation dosée en carburant et un turbocompresseur à gaz d'échappement dont la turbine à gaz d'échappement reçoit, par des conduits de gaz d'échappement, les gaz d'échappement provenant des chambres de combustion du moteur à combustion interne et entraîne un compresseur pour l'air comburant, l'allumage étant coupé lorsque le moteur à combustion interne travaille en décélération, caractérisé en ce que :

a) le fonctionnement en décélération, le fonctionnement en marche à vide et en charge partielle inférieure du moteur à combustion interne sont déterminés ;

b) dans chacun de ces états de fonctionnement, une combustion du mélange de gaz d'échappement dans les conduits de gaz d'échappement est produite, et

c) pour ce faire, des coupures d'allumage isolées ou plusieurs coupures d'allumage sont commandées suivant un modèle prédéfini ;

d) avec une pression d'admission P décroissante et avec une demande d'alimentation décroissante, il est procédé à des coupures d'allumage multipliées ;

e) le débit commandé d'air comburant dans la conduite d'admission du moteur à combustion interne est augmenté, pendant la coupure d'allumage, par une augmentation commandée supplémentaire de la section d'admission.

2. Procédé selon la revendication 1, caractérisé en ce que pendant la coupure d'allumage, le point d'allumage pour les chambres de combustion où se produit un allumage est décalé en retard.

3. Procédé selon la revendication 1 ou 2, caractérisé en ce qu'avec la coupure d'allumage, la proportion de carburant dans le mélange air-carburant est augmentée par rapport à la composition normale du mélange, sensiblement stœchiométrique.

4. Procédé selon l'une quelconque des revendications 1 à 3, caractérisé en ce que la pression d'admission P en aval du compresseur et la demande d'alimentation du moteur à combustion interne sont utilisées pour la commande des coupures d'allumage, du réglage du point d'allumage et de l'augmentation de la proportion de carburant. ·

5. Procédé selon l'une quelconque des revendications 1 à 4, caractérisé en ce que le modèle des coupures d'allumage est tel que chaque coupure d'allumage soit suivie par au moins un allumage dans les chambres de combustion subséquentes dans le temps.

0 167 733